# EUROPEAN PATENT APPLICATION

(11) **EP 3 114 963 A1**
(43) Date of publication of application: **11.01.2017**
(21) Application number: 15758270.1
(22) Date of filing: 04.03.2015
(51) Int. Cl.: A45D 40/00, B65D 47/34, B65D 83/76

(54) **CREAM-TYPE COSMETIC CONTAINER HAVING VACUUM PUMP**

(30) Priority: 04.03.2014 KR 20140025424
(71) Applicant: Yonwoo Co., Ltd., Incheon 404-250 (KR)
(72) Inventor: KIM, Sung-Hwan, Incheon 404-250 (KR)
(74) Representative: chapman + co
(86) International application number: PCT/KR2015/002098
(87) International publication number: WO 2015/133822

(57) **Abstract**

Provided is a cream-type cosmetic container having a vacuum pump which is configured such that a pumping member performs a pumping operation to discharge contents when a handle part is rotated by a predetermined section. Thus, contents having high viscosity can be discharged even with a small force. Furthermore, the container is configured such that a discharged amount of contents is adjusted according to a rotation angle of the handle part. Therefore, a user can use the container while adjusting discharged amount to a desired amount.

## Description

### BACKGROUND OF THE INVENTION

The present invention disclosed herein relates to a cream-type cosmetic container having a vacuum pump. The container is configured such that a pumping member performs a pumping operation to discharge contents when a handle part is rotated by a predetermined section. Thus, contents having high viscosity can be discharged even with a small force. Furthermore, the container is configured such that a discharged amount of contents is adjusted according to a rotation angle of the handle part. Therefore, a user can use the container while adjusting discharged amount to a desired amount.

Generally, a vacuum cosmetic container is configured such that contents contained in a cosmetic container are prevented from being contacted with air. The container comprises a container body wherein contents are stored, a support body which is coupled encasing an upper portion of the container body and supports a pumping member, a pumping member which makes an interior portion of the container body vacuumed and discharges contents according to a pumping operation, and a button part which is disposed at an upper portion of the pumping member and pressurizes the pumping member according to user's pressurizing, wherein a content discharging hole is formed at a center thereof.

A vacuum cosmetic container having structures as the above is configured such that a dent gradually sunken more toward a center thereof is equipped at an upper portion of a button part and a user can apply contents discharged on the dent with his/her hand. Since a content discharging hole is disposed at a center of the button part, a user cannot pump by pressurizing the center of the button part when using the container; instead, the user pressurizes either side of the button part which has a discharging hole in the center or both sides thereof so as to perform a pumping operation.

However, when a user pressurizes either side of the button part with one hand, the button part is likely to incline to a side and thereby cannot be pumped properly, which makes it difficult to steadily discharge a constant amount of contents.

Accordingly, a user has to pressurize both sides of the button part with a discharging hole at the center and pumps to discharge contents. In this case, the user must use both hands, which causes user inconvenience.

To solve these problems as the above, "A cream-type cosmetic container having a vacuum pump" is disclosed in Korean Publicized Patent No. 10-2013-0107388 (Hereafter, it will be referred as 'the publicized patent')

The publicized patent above comprises an outer container; an inner container coupled to an interior of the outer container and containing contents therein, comprising a piston which ascends according to usage of content inside the inner container and at a lower end an air inflow hole such that air can flow in so as to lift the piston; a support body coupled encasing an upper portion of the outer container and supports a pumping member; a pumping member coupled to the support body and discharging content by pumping operation; a button part disposed at an upper portion of the pumping member and pressurizing the pumping member, wherein a pressurization display part is formed such that a user's hand can be safely reached to pressurize the pumping member, and a discharging part having a content discharging hole at a slanted position from the pressurization display part is formed; and a content movement part comprising a coupling tube coupled to an upper portion of the pumping member, and a communicating part which is coupled to the button part, protruding in a upward direction from the coupling tube and connected with the content movement tube, further comprising a passage where the moving direction of contents moving in a perpendicular direction through the coupling tube is changed to the content discharging hole slanted to one side, and the contents move thereinto.

It is characterized to comprise at least one or more air-moving holes formed with a portion of the upper end cut open at an upper end of the outer container such that air can move to an air inflow hole formed at a lower end of the inner container and allow a piston to ascend.

However, the publicized patent above has a configuration wherein contents are discharged through pressurizing a button part. Therefore, discharging a high viscosity content requires considerably a lot of force and in addition, it is impossible for a user to discharge as much amount of contents as he/she desires since a constant amount of contents is always discharged when the button part is pressurized. In case more amount of contents than required is discharged, it will cause an unnecessary consumption of contents.

### SUMMARY OF THE INVENTION

The present invention is devised to solve such problems described in the above, and the objectives thereof are to provide a cream-type cosmetic container having a vacuum pump which has a configuration wherein the pumping operation of a pumping member is performed when a handle is rotated within a predetermined section and thereby not only allows content to be discharged but also controls the amount of content discharged as much as a user wants by adjusting the amount of content to be discharged as required according to the rotation angle of the handle.

To solve the problems above, a cream-type cosmetic container having a vacuum pump, according to first embodiments of the present invention, is characterized in including: an container body containing content and having a volume thereof get smaller as content is being used; a support body coupled encasing an upper part of the container body and comprising a cylinder such that pumping operation of a pumping member is possible; a pumping member inserted to a cylinder of the support body and discharging content by pumping operation according to ascent/descent movement thereof; a rotation discharging part disposed at an upper portion of the pumping member, and composed of a discharging part having a content discharging hole at one side of an upper end such that content can be discharged and a handle part which a user can grip at the other side of the upper end.

Furthermore, the container is characterized in that pumping operation of the pumping member is performed by rotating the rotation discharging part with the handle part gripped and thereby content is discharged through the content discharging hole.

Furthermore, the container is characterized in that at an upper portion of the container body is formed a fixing body which is coupled encasing the support body and a rotation discharging part, including a display part that displays the range of a rotation angle of the handle which rotates the rotation discharging part so as to control a discharged amount of content.

Furthermore, the container is characterized in that at least one or more pressurizing protrusions extends from an inner upper side of the rotation discharging part to a downward direction and pressurizes the pumping member according to the rotation of the rotation discharging part.

Furthermore, the container is characterized in that at an upper end of the pumping member is equipped a pumping guide protrusion which is pressurized by the pressurizing protrusion according to the rotation of the rotation discharging part, wherein the pumping guide protrusion comprises a gentle slope from one side to the other side such that the pressurizing protrusion can move along the upper surface of the pumping guide protrusion when the rotation discharging part rotates.

Furthermore, the container is characterized in that, when a rotation discharging part is rotated through the handle part while the pressurizing protrusion moves along the upper surface of the pumping guide protrusion, a travel distance of the pumping member 300 is adjusted by a difference of the slope heights of the pumping guide protrusion 313 according to the rotation angle of the handle part 420, and thereby the discharged amount of contents is controlled.

Furthermore, the container is characterized in that at a dead end of the pumping guide protrusion is equipped a limiting protrusion which limits the movement of the pressurizing protrusion.

Furthermore, the container is characterized in that between the pumping member and the rotation discharging part is equipped a content movement part which moves content discharged from the pumping member to the content discharging hole, wherein the content moving part is composed of an inserting tube which is coupled to an upper portion of the pumping member; and a communication part which protrudes from the inserting tube to an upward direction, coupled to the button part and communicated with the content discharging hole, and changes the moving direction of content moving through the inserting tube to a perpendicular direction and thereby forms a passage where content moves to the content discharging hole which has a slope to one side.

Furthermore, the container is characterized in that the support body comprises a perpendicular guide groove which guides the perpendicular movement of the pumping member so as to prevent the pumping member from being slanted to one side when ascending/descending, and a perpendicular guide protrusion which ascends/descends along the perpendicular guide groove at an outer circumferential surface of the pumping member.

As described as the above, according to the present invention, a cream-type cosmetic container having a vacuum pump has an advantage in that a pumping member performs a pumping operation to discharge contents when a handle part is rotated by a predetermined section. Thus, contents having high viscosity can be discharged even with a small force. Furthermore, the container is configured such that a discharged amount of contents is adjusted according to a rotation angle of the handle part, and thereby a user can use the container while adjusting contents to be discharged as much as desired.

### BRIEF DESCRIPTION OF THE DRAWINGS

FIG. 1 is an exploded perspective view illustrating a configuration of a cream-type cosmetic container having a vacuum pump according to an exemplary embodiment of the present invention.
FIG. 2 is a combined perspective view illustrating a configuration of a cream-type cosmetic container having a vacuum pump according to an exemplary embodiment of the present invention.
FIG.3 is a cross-sectional view illustrating a configuration of a cream-type cosmetic container having a vacuum pump according to an exemplary embodiment of the present invention.
FIG. 4 to FIG. 8 are explanatory views illustrating using methods of a cream-type cosmetic container having a vacuum pump according to an exemplary embodiment of the present invention.
FIG. 9 is an exploded perspective view illustrating a configuration of a cream-type cosmetic container having a vacuum pump according to an exemplary embodiment of the present invention.
FIG.10 to FIG.12 are explanatory views illustrating using methods of a cream-type cosmetic container having a vacuum pump according to an exemplary embodiment of the present invention.

### DETAILED DESCRIPTION OF PREFERRED EMBODIMENTS

Hereinafter, the present invention will be described in detail with reference to the accompanying drawings. The same reference numerals provided in the drawings indicate the same members.

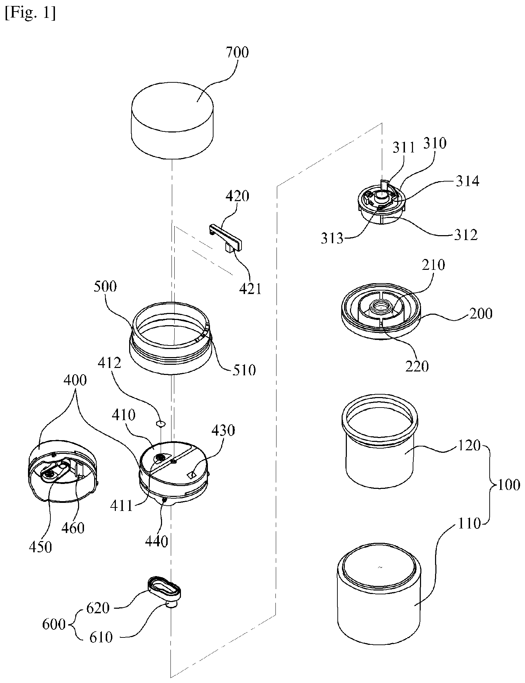

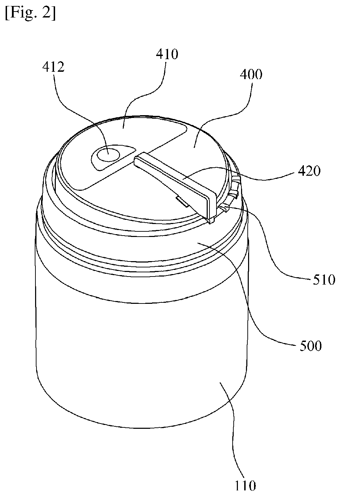

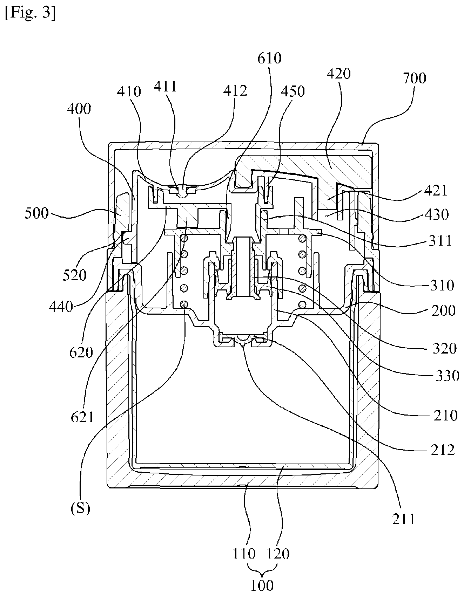

FIG. 1 is an exploded perspective view illustrating a configuration of a cream-type cosmetic container having a vacuum pump according to an exemplary embodiment of the present invention. FIG. 2 is a combined perspective view illustrating a configuration of a cream-type cosmetic container having a vacuum pump according to an exemplary embodiment of the present invention. FIG. 3 is a cross-sectional view illustrating a configuration of a cream-type cosmetic container having a vacuum pump according to an exemplary embodiment of the present invention.

Referring to FIGS. 1 to 3, of a cream-type cosmetic container having a vacuum pump according to an exemplary embodiment of the present invention may include a container body 100, a support body 200, a pumping member 300, a rotation discharging part 400, a fixing body 500, a content moving part 600, and an over cap 700.

The container body 100 comprises a double container of an outer container 110 and an inner container 120, and contents are stored in an inner container 120 receiving an outer container 110, wherein the inner container 120 equips a piston at an inner side which ascends according to content usage or may comprise various containers of which the volume thereof gets smaller according to a content usage, e.g. soft material which gets adhered according to a content usage.

Furthermore, it is possible for the container body 100 not to be made of a double container of an outer container 110 and an inner container 120, instead to be made of a single container for storing contents.

The support body 200 is coupled encasing an upper portion of the container body 100, comprising a cylinder 220 such that a piston rod 320 of a pumping member 300 and a seal cap 330 perform a pumping operation as ascending/descending. At a lower end of the cylinder 210 is equipped a content inflow hole 211 such that contents stored in the inner container 120 may flow in when a pumping member 300 operates, and at an upper end of the content inflow hole 211 is equipped a check valve 212 which is opened/closed according to the operation of the pumping member 300.

Furthermore, at the support body 200 is provided a perpendicular guide groove 220 such that a perpendicular guide protrusion 312 formed at an outer circumferential surface of the pumping member 300 can be inserted and ascended/descended, wherein the perpendicular guide groove 220 guides a perpendicular movement of a pump body 310 so as not to be slanted to one side when a pumping member 300 ascends/descends.

The pumping member 300 is inserted into a cylinder 210 of the support body 200 and discharges contents by a pumping operation according to an ascent/descent movement, further including a pump body 310, a piston rod 320 and a seal cap 330.

The pump body 310 is movably coupled to an inserting tube 310 of a content moving part 600 and ascended/descended according to the presence or absence of pressurization of a pressurizing protrusion 460, 621, further comprising a coupling tube 311 at a center thereof so as to be coupled with the inserting tube 310.

According to the present invention, it is characterized that at an upper end of the pump body 310 is equipped a pumping guide protrusion 313 which is pressurized by the pressurizing protrusion 460, 621 according to the rotation of a rotation discharging part 400 to be described later. The pumping guide protrusion 313 is configured to form a gentle slope from one side to the other side such that the pressurizing protrusion 460, 621 can move along an upper surface of the pumping guide protrusion 313 when the rotation discharging part 400 rotates. Therefore, due to the gentle slope, a traveling distance of the pumping member 300 is determined according to a rotating angle of the rotation discharging part 400 by adjusting the handle and thereby makes it possible to adjust amount of content to be discharged.

Meanwhile, at an upper end of the pumping guide protrusion 313 is provided a limiting protrusion 314 which limits the movement of pressurizing protrusions 460, 621 so as to control the rotation angle of a rotation discharging part 400.

The pumping body 310, when an inner upper side thereof is supported by a spring (S) and a user applies a pressurizing force that controls the handle part 420, is moved to an upper portion by an elastic force of a spring (S), wherein in the process of upward movement move, a pressurizing protrusion 460, 621 moves to the opposite direction along the slope of the pumping guide protrusion 313 and is restored to a state for a next pumping operation.

Meanwhile, at an outer circumferential surface of the pumping body 310 is provided a perpendicular guide protrusion 312 which ascends/descends along the perpendicular guide grooves 220 so as not to be inclined to one side when a pump body 310 ascends/descends.

The piston rod 320 is coupled to an inner side of the pump body 310 and moves along the movement of the pump body 310, wherein at an outer circumferential surface thereof is coupled a seal cap 330 which is tightly contacted to an inner wall of the cylinder 210 and moves according to an ascent/descent of the piston rod 320, thereby changing the inner pressure of the cylinder 210.

The rotation discharging part 400 disposed at an upper portion of the pumping member 300 has a discharging part 410 which comprises a content discharging hole 411 at one side of an upper end thereof such that contents can be discharged and a handle part 420 for a user to grip at the other side of the upper end thereof. In this present invention, it is configured that the rotation discharging protrusion 400 performs a pumping operation of the pumping member 300 by rotating the rotation discharging part 400 through which a user grips the handle part 420, and rotates the handle part 420 such that content can be discharged through the content discharging hole 411.

To achieve this, at an inner upper side of the rotation discharging part 400 are provided at least one or more pressurizing protrusions 460 which extend from an upper side to a downward direction and pressurizes a pumping guide protrusion 313 of the pumping member 300 according to the rotation of the rotation discharging part 400, wherein the pressurizing protrusion 460, when a rotation discharging part 400 is rotated through the handle part 420, adjusts a travel distance of the pumping member 300 by a difference of the slope height of the pumping guide protrusion 313 according to the rotation angle of the handle part 420 while the pressurizing protrusion 460 is moving along an upper surface of the pumping guide protrusion 313, thereby controlling the discharged amount of contents.

It is preferred that a lower end of the pressurizing protrusion 460 should be formed of a shape that corresponds to the slope so as not to be interfered while the pressurizing protrusion 460 is moving along the slope of the pumping guide protrusion 313.

Meanwhile, a rotation discharging part 400 is provided at the handle 420 so as to be able to be coupled to a couple hole 430 equipped at an upper end of the rotation discharging part 400. Drawings of the present invention show as the handle part 420 is combined with a rotation discharging part 400; however, it is possible for the handle part 420 to be integrated with a rotation discharging part 400.

Meanwhile, at a rotation discharging part 400 is provided a fixing protrusion 440 which is supported by a fixing protrusion 520 of the fixing body 500 to be described later such that a rotation discharging part 400 can be prevented from moving to an upward direction.

Meanwhile, it is characterized that the discharging part 410 is provided dented from an upper end of the rotation discharging part 400 to a downward direction. The contents discharged through a content discharging hole 411 is discharged to an upper end of the discharging part 420 formed with a shape of a dented plate, wherein at the content discharging hole 411 is provided a rubber tip 412 which prevents contents from flowing out when a user does not intend to discharge and is opened by the content pressure when contents are ascended by a pumping operation of the pumping member 300.

Meanwhile, at an inner side of the rotation discharging part 400 is provided a coupling part 450, which will be described later, wherein a communicating part 620 is coupled.

The fixing body 500 is coupled encasing the support 200 and the rotation discharging part 400 at an upper portion of the container body 100 and supports the rotation discharging part 400, wherein at an inner side thereof is provided a fixing protrusion 520 which supports a fixing protrusion 440 of the rotation discharging part 400 and limits an upward movement of the rotation discharging part 400.

In the present invention, it is characterized that at the fixing body 500 is provided a display part 510 which displays the rotation angle of the handle part 420 that rotates the rotation discharging part 400, wherein the display part 510 has a multitude with predetermined distance apart. When a user rotates the handle part 510 and then releases a rotation pressurizing force after stopping the handle part 420 at one display part among a multitude of display parts 520, the discharging amount of contents is determined according to the rotated angle of the handle part 420. At this time, the bigger rotation angle the handle part 420 has, the more amount of contents is discharged.

The content moving part 600 is disposed between the pumping member 300 and the rotation discharging part 400 and moves contents which move through the pumping member 300 to a content discharging hole 411, further comprising an inserting tube 610 coupled to a coupling tube 311 of the pumping member 300, and a communicating part 620 composed of a passage where contents flowing through the inserting tube 610 and fitted into a coupling part 450 formed at an inner side of the rotation discharging part 400.

The communicating part 620 is fitted into a coupling part 450 and communicated with the content discharging part 411, thereby guiding contents flowing from the pumping member 300 to be discharged to the outside through the content discharging hole 411.

Meanwhile, at a lower end of the communicating part 620 is provided a pressurizing protrusion 621 which pressurizes the pumping guide protrusion 313 when the rotation discharging part 400 rotates, wherein the pressurizing protrusion 621 provided at the communicating part 620, like a pressurizing protrusion 460 provided at the rotation discharging part 400, moves along an upper surface of the pumping guide protrusion 313 according to the rotation of the rotation discharging part 400 and controls a traveling distance of the pumping member 300.

The over cap 700 encasing the rotation discharging part 400 and coupled separably at an upper portion of the container body 100 prevents malfunction of the handle part 420.

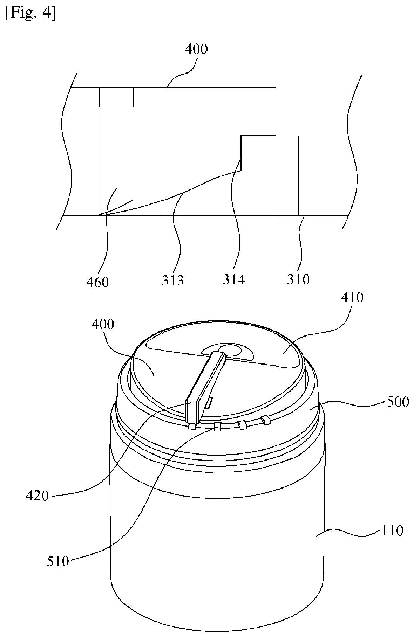

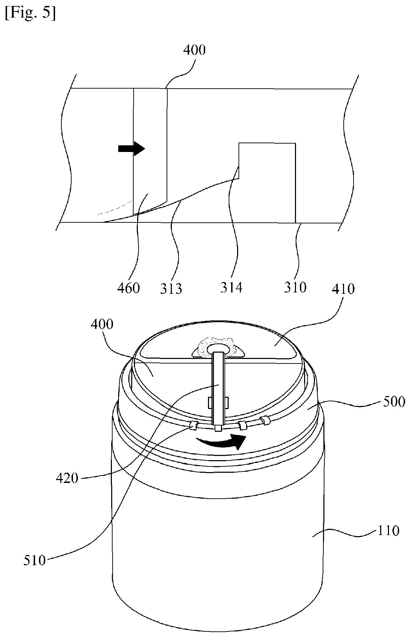

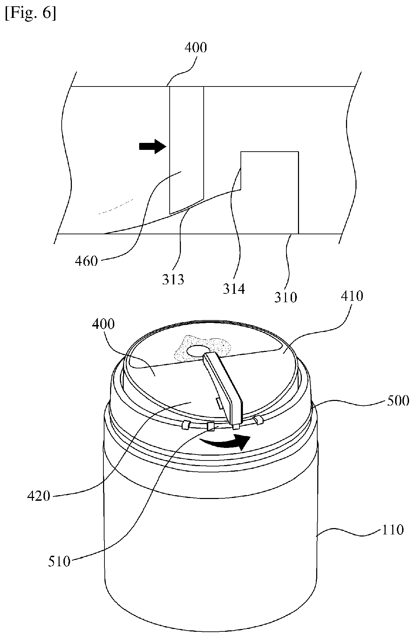

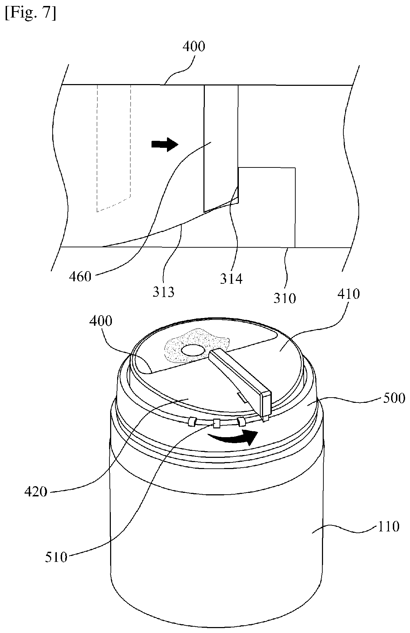

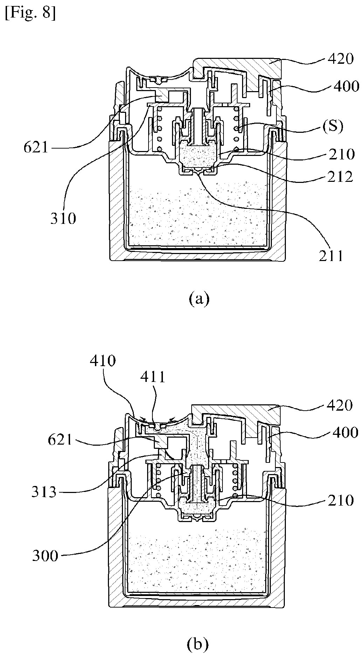

Hereinafter, referring FIGS. 4 to 8, a using method of a cream-type cosmetic container having a vacuum pump according to an exemplary embodiment of the present invention will be described. FIGS. 4 to 8 are explanatory views illustrating a using method of a cream-type cosmetic container having a vacuum pump according to an exemplary embodiment of the present invention.

Referring FIGS. 4 to 8, a pressurizing protrusion 460, 621 is disposed at an upper end of a pump body 310 in a state of a handle part 420 not being manipulated, and in this state, when a user grips the handle part 420 and rotates to one side direction, the pressurizing protrusion 460, 621 moves along a slope of a pumping guide protrusion 313 as a rotation discharging part 400 rotates.

As the above, when a pressurizing protrusion 460, 621 moves along a slope of a pumping guide protrusion 313, the pumping guide protrusion 313 is pressurized by the pressurizing protrusion 460, 621, such that a pumping member 300 descends, making content to be discharged through a pumping operation of the pumping member 300. When a user releases a rotation pressurizing force after stopping a handle part 420 at any display part 510 among a multitude of display parts 510 while rotating the handle part 420, the position of the pressurizing protrusion 460, 621 is determined at a slope of a pumping guide protrusion 313 according to the angle by which the handle part 420 has rotated and the traveling distance of the pumping member 300 is adjusted as much as the slope height of the pumping guide protrusion 310 where the pressurizing protrusion 460, 621 is located, such that the discharged amount of contents is determined. At this time, the bigger the rotation angle of the handle part 420 is, the more amount of content is discharged.

Meanwhile, when a user releases a pressurizing force that controls a handle part 420, the pumping body 310 moves to an upper portion by an elastic force of a spring (S), and while moving to an upper portion, a pressurizing protrusion 460, 621 moves to the opposite direction along a surface of the slope of the pumping guide protrusion 313 and restore a state for a next pumping operation.

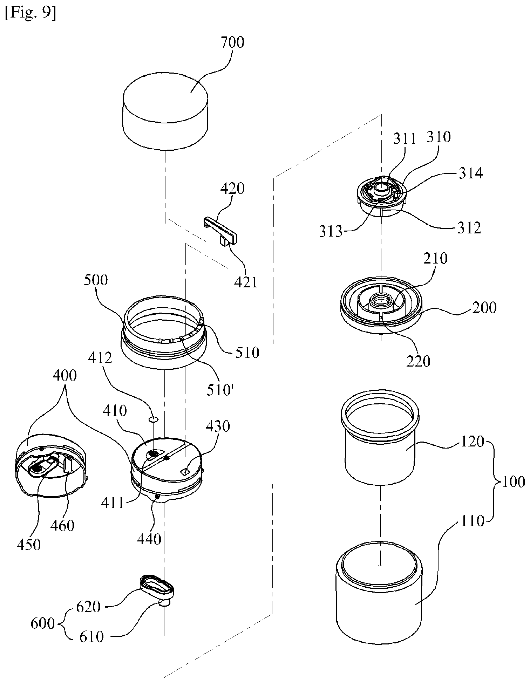

Hereinafter, referring FIGS. 9 to 12, a cream-type cosmetic container having a vacuum pump and a using method thereof according to an exemplary embodiment of the present invention will be described.

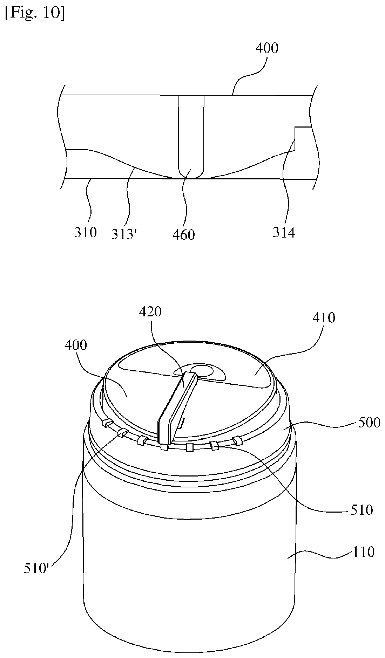

FIG. 9 is an exploded perspective view illustrating a configuration of a cream-type cosmetic container having a vacuum pump according to an exemplary embodiment of the present invention. FIG.10 to FIG.12 are explanatory views illustrating using methods of a cream-type cosmetic container having a vacuum pump according to an exemplary embodiment of the present invention.

Referring FIGS. 9 to 12, a cream-type cosmetic container having a vacuum pump according to an exemplary embodiment of the present invention is characterized to comprise a pumping guide protrusion 313 at both sides with a pressurizing protrusion 460 of a rotation discharging part 400 at a center thereof, which makes it possible to move a handle part 420 to both directions, such that a left-handed person as well as a right-handed can manipulate the handle part 420 with ease and brings user convenience.

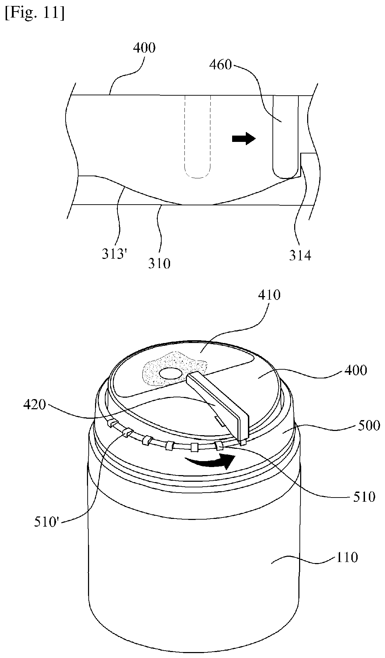

Explaining a method to use in detail, when a left-handed person, as shown in FIG. 11, rotates the handle part 420 to one side direction, a pressurizing protrusion 460, 621 moves along the slope of a pumping guide protrusion 313 as a rotation discharging part 400 is rotated to one side, and thereby contents are discharged through a pumping operation. At this time, the user can control contents to be discharged as much as desired by placing the handle part 420 at any display part 510 among a multitude of display parts 510 while rotating the handle part 420.

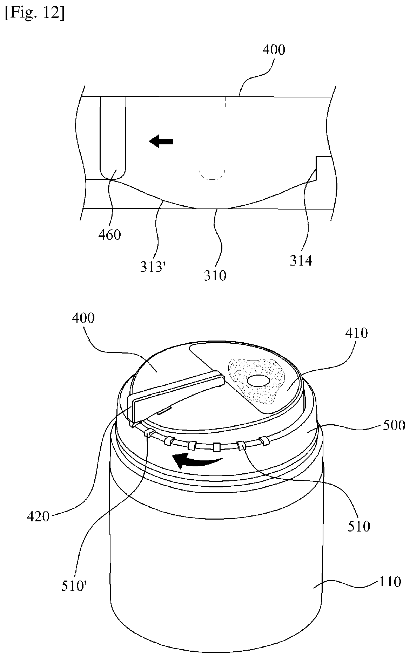

Meanwhile, when a right-handed person, as shown in FIG. 12, rotates the handle part 420 to the other side direction, the pressurizing protrusion 460, 621 moves along the slope of the pumping guide protrusion 313' as the rotation discharging part 400 rotates to the other side, and thereby contents are discharged through a pumping operation of the pumping member 300. At this time, the user can control contents discharged as much as desired by placing the handle part 420 at any display part 510' among a multitude of display parts 510' while rotating the handle part 420.

Detailed explanations of the rest structures are omitted because they have the same functions and structures with an exemplary embodiment of the present invention.

As described above, optimal embodiments have been disclosed in the drawings and the specification. Although specific terms have been used herein, these are only intended to describe the present invention and are not intended to limit the meanings of the terms or to restrict the scope of the present invention as disclosed in the accompanying claims. Therefore, those skilled in the art will appreciate that various modifications and other equivalent embodiments are possible from the above embodiments. Therefore, the scope of the present invention should be defined by the technical spirit of the accompanying claims.

## Claims

1. A cream-type cosmetic container having a vacuum pump comprising:
a container body (100) containing contents and having a volume thereof reduced according to using contents;
a support body (200) coupled encasing an upper portion of the container body (100), further comprising a cylinder (210) for making a pumping operation of a pumping member (300) possible;
a pumping member (300) inserted to a cylinder (210) of the support body (200) and discharging contents according to a pumping operation by an ascent/descent movement thereof; and
a rotation discharging part (400) disposed at an upper portion of the pumping member (300), further comprising a discharging hole (410) having a content discharging hole (411) for contents to be discharged at a side of an upper end thereof, and a handle part 420 for a user to grip,
wherein a pumping operation of the pumping member (300) is achieved according to rotating the rotation discharging part (400) by gripping the handle part (420) and thereby contents are discharged through the content discharging hole (411).

2. The cream-type cosmetic container having a vacuum pump of claim 1, comprising a fixing body (500) which is coupled encasing the support body (200) and the rotation discharging part (400) at an upper portion of the container body (100), further comprising a display part (510) which displays a rotation angle of the handle part (420) rotating the rotation discharging part (400) so as to control the discharged amount of contents.

3. The cream-type cosmetic container having a vacuum pump of claim 2, comprising at least one or more pressurizing protrusions (460, 621) extending from an inner upper side of the rotation discharging part (400) to a downward direction and pressurizing the pumping member (300) according to a rotation of the rotation discharging part (400).

4. The cream-type cosmetic container having a vacuum pump 3, comprising at an upper end of the pumping member (300) a pumping guide protrusion (313) pressurized by the pressurizing protrusion (460, 621) according to a rotation of the rotation discharging part (400),
wherein the pumping guide protrusion (313, 313') comprises a gentle slope from one side to the other side such that the pressurizing protrusion (460, 621) can move along an upper surface of the wherein the pumping guide protrusion (313, 313') when the rotation discharging part (400) rotates.

5. The cream-type cosmetic container having a vacuum pump of claim 4, wherein a travel distance of the pumping member (300) is adjusted by a difference of slope heights of the pumping guide protrusion (313, 313') according to a rotation angle of the handle part (420) in the process of the pressurizing protrusion (460, 621) moving along an upper surface of the pumping guide protrusion (313) when the rotation discharging part (400) is rotated through the handle part (420), and thereby the discharged amount of contents is adjusted.

6. The cream-type cosmetic container having a vacuum pump of claim 4, further comprising
a limiting protrusion (314) which limits a movement of the pressurizing protrusion (460, 621) at an end of the pumping guide protrusion (313).

7. The cream-type cosmetic container having a vacuum pump of claim 1, further comprising
a content moving part (600) moving contents discharged from the pumping member (300) to the content discharging hole (411) between the pumping member (300) and the rotation discharging part (400),
wherein the content discharging hole (411) comprises an inserting tube (610) coupled to an upper portion of the pumping member (300), and a communicating part (620) protruding from the inserting tube (610) to an upward direction, coupled to the button part and communicated with the content discharging hole (411), further comprising a passage which changes a moving direction of contents flowing to a perpendicular direction through the inserting hole (610) and moves to the content discharging hole (411) slanted to one side.

8. The cream-type cosmetic container having a vacuum pump of claim 1, comprising:
a perpendicular guide groove (220) guiding a perpendicular movement of the pumping member (300) at the support body (200) so as to prevent the pumping member (300) from being slanting to one side when ascending/descending, and
a perpendicular protrusion (312) ascending/descending along the perpendicular guide groove at an outer circumferential surface of the pumping member (300).
